# EUROPEAN PATENT SPECIFICATION

(11) **EP 1 511 232 B1**
(45) Date of publication and mention of the grant of the patent: **28.05.2008**
(21) Application number: 03019474.0
(22) Date of filing: 28.08.2003
(51) Int. Cl.: H04L 12/56

(54) **A method for transmission of data packets through a network**
Verfahren zum Übertragen von Datenpaketen in einem Netzwerk
Procédé de transmission de paquets de données à travers un réseau de télécommunication

(43) Date of publication of application: 02.03.2005
(73) Proprietor: Nokia Siemens Networks GmbH & Co. KG, 81541 München (DE)
(72) Inventor: De Vega Rodrigo, Miguel, 81737 München (DE); Pleich, Robert, Dr., 81739 München (DE)

(56) References cited:
- DETTI A, LISTANTI M: "Application of Tell & Go and Tell & Wait Reservation Strategies in a Optical Burst Switching Network: a Performance Comparison" PROCEEDING OF IEEE INTERNATIONAL CONFERENCE ON TELECOMMUNICATIONS (ICT), vol. 2, 2001, pages 540-548, XP002268551
- QIAO C, YOO M (UNIVERSITY AT BUFFALO, BUFFALO, NY 14260): "Choices, Features and Issues in Optical Burst Switching" OPTICAL NETWORK MAGAZINE, 27 July 1999 (1999-07-27), pages 36-44, XP002268552
- BALDINE I, ROUSKAS G, STEVENSON D: "JumpStart: A Just-in-Time Signaling Architecture for WDM Burst-Switched Networks" IEEE COMMUNICATIONS MAGAZINE, 2002, XP002268553

## Description

In the following networks are considered, which consist of central nodes and edge nodes. At least some of the central nodes are connected with one or more edge nodes, whereby every edge node is connected with only one central node. The central nodes of the considered network have no storage capabilities. This will be explained later in detail.

The edge nodes receive data packets from sources and send data packets to sinks outside the network.

In order to transmit data packets through a network, different methods are known.

In an edge node of a network, like an Optical Burst Switched (OBS) network, received or incoming data packets, like Internet Protocol (IP) packets, Asynchronous Transfer Mode (ATM) cells or Protocol Data Units (PDUs), are aggregated in the node to a burst with an associated header. The burst contains a number of data packets to a certain destination and is aggregated according to a predefined aggregation strategy. This burst is sent through the network to the destination. Before sending the burst, a path, way or trail has to be set up or reserved in the network, in order that the burst is properly transmitted through the network to its destination. This is done by the associated header. After aggregation of the burst, the header is generated and sent from the edge node to the connected or associated central node. There the header is evaluated and a path is reserved for the succeeding burst. Then the header is sent to a next central node, the header is evaluated, a path is reserved and the header is sent to a next central node until a path to a destination for the succeeding burst is reserved. After sending the header and elapsing of a certain time in the edge node, which is for the path reservation in the central nodes, the burst is sent to the associated central node. The burst is sent from central node to central node through the reserved path to a destination of the burst, which is a certain edge node. There the burst is separated into the data packets, which are sent to further destinations.

In networks, like Optical Packet Switching (OPS) networks, the same principles as in OBS networks are applied, with the difference, that every data packet is transformed to a packet with an associated header. The packets are sent like the bursts. The same reservation and transmission principles as applied for the header of the burst are applied for the header of a packet.

In principle, in case of an OBS and OPS network no storage capacities for the bursts or packets are provided in the central nodes of the network. They could be provided by fibre delay lines for storing optical packets or bursts. These optical storages are currently very expensive. Limited storage capacities are provided for the header of a burst or packet, as they are much smaller. The header can be converted from optical to electrical, evaluated, stored and modified electrically and converted to optical again.

A key characteristic of these networks is the one-pass reservation scheme of network resources respectively network nodes for each individual burst or packet. Bursts are sent without an acknowledgement of successful path set up and burst loss can occur in case of contention.

Examples for OBS networks are described in the following documents. In "Application of Tell & Go and Tell & Wait Reservation Strategies in a Optical Burst Switching Network: a Performance Comparision" from A. Detti, M. Listanti, University of Rome, a comparison between two resource reservation techniques when they are used in an All Optical Network for the support of high-speed IP traffic are described.

In "Choices, Features and Issues in Optical Burst Switching" from C. Qiao, M. Yoo, University at Buffalo (SUNY), design choices in burst-switching are explored and a new variation that is especially suitable for optical WDM networks is described. The source nodes of an OBS network are adapted to work in the electrical and in the optical domain. According to the Just-Enough-Time protocol a source sends out a control packet, which is followed by a burst after an offset time. The burst is buffered at the source in the electrical domain while the control packet is being processed. If the requested bandwidth is not available, the burst is said to be blocked, and will be dropped or may be buffered and then be transmitted later.

In "JumpStart: A Just-in-Time Signalling Architecture for WDM Burst-Switched Networks" from Ilia Baldine, George N. Rouskas, Harry G. Perros and Dan Stevenson, MCNC and North Carolina State University, an architecture for a core DWDM network which utilizes the concept of optical burst switching coupled with a just-in-time signalling scheme is presented.

In a ring network, a number of central nodes are connected to a ring, whereby at least a part of the central nodes have a connection to at least one associated edge node, where an edge node is connected with one central node.

Any node detecting a failure is adapted to send back a failure message to the source node (page 89, left column, last paragraph). Bursts belonging to the same connection are guaranteed to take the same path, but they are not guaranteed to be successful

In a star network, there is only one central node, which has connections to several edge nodes.

In a bus network, a number of central nodes are connected in a row, where every central node has two neighbours, except the central nodes at the end of the bus (respectively row). At least a part of the central nodes are connected to at least one edge node, whereby every edge node has a connection to only one central node.

It is an object of the invention to present methods for transmission of data packets or bursts through a ring-, star -or bus-network with no packet respectively burst losses.

This object is achieved by the features cited in claim 1 or 2.

Due to the fact that packets respectively bursts are not sent in case of a reservation or blocking conflict respectively contention in a central node the advantage of the invention is that packet or burst losses are avoided.

Further improvements of the invention are identified in subclaims.

In an embodiment of the invention an answer is sent from the central node to the edge node with a time or time lag for an occupancy of the central node. Said time or time lag is generated by the central node according to an analyse of its reservation scheme respectively reservation schedule for the data packets or bursts. After the analysis, the central node calculates a time or time lag for the associating edge node, when a new attempt to send a header respectively for the reservation of a path seems to be successful. This time or time lag is inserted in the answer and transmitted to the edge node. The answer is received and evaluated. After expiring of this time or time lag, the edge node sends the previously sent header again to the central node, in order to try to reserve a path for its packet or burst. Meanwhile the packet or burst is stored in the edge node. This has the advantage of an economic attempt for a reservation.

In an other embodiment of the invention in case of a reservation conflict the central node schedules a reservation for the burst or packet of the associated header, determines a particular time or a time lag for transmission of said packet or burst, sends an answer where said particular time or time lag is contained to the originating edge node. There said answer is evaluated, the sending of the packet or burst is abandoned, the packet or burst is stored in the edge node and after expiring of said time or time lag the packet or burst is sent to the central node, to use the scheduled reservation. This has the advantage of an economic reservation and loss free transmission of packets or bursts.

In a further embodiment of the invention, arriving data packets are added to a stored burst. This has the advantage, that only one burst has to be reserved instead of two successive bursts. A higher multiplexing and transmission gain is achieved, which is economic.

Further advantages of the invention are mentioned in the embodiment of the invention.

An exemplary embodiment of the invention is explained by means of a drawing.

### Shown in the drawing is:

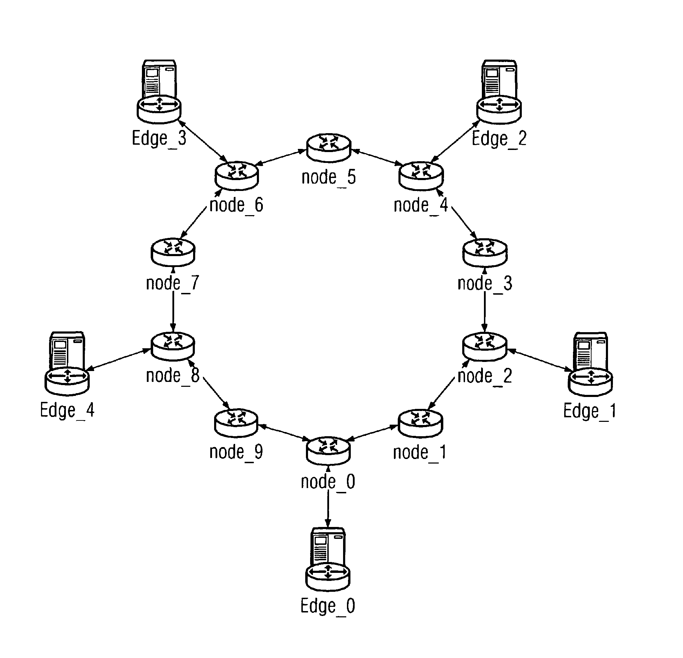

Figure 1 a ring network.

Figure 1 shows ten central nodes respectively ring nodes node_0, node_1, ..., node_9, whereby every central node is connected with two other central nodes to form a ring network. These central nodes can be switches, network elements, routers or optical switches for an OBS or OPS network. Five edge nodes Edge_0, Edge 1, ..., Edge 4 are connected to a central node. Edge node Edge_0 is connected with central node node_0, edge node Edge_1 is connected with central node node_2, edge node Edge_2 is connected with central node node_4, edge node Edge_3 is connected with central node node_6 and edge node Edge_4 is connected with central node node_8.

The edge nodes Edge_0, Edge 1, ..., Edge 4 aggregate data packets from not shown sources to bursts, like optical bursts, or transform them to optical packets as explained before. These burst/packets are sent from the edge node to the associated central node and further through the central network to a destination edge node. The edge nodes Edge_0, Edge 1, ..., Edge 4 divide bursts received by the OBS or OPS network respectively central nodes into data packets and send them to not shown sinks or destinations.

In such a ring network, the only nodes where blocking might take place are those which are connected to an edge node. These are the central nodes node_0, node_2, node_4, node_6 and node_8. The rest of the central nodes, e.g. node_1, node_3, node_5, node_7 and node_9, merely forward the packets or bursts and therefore are blocking free.

After sending a header of a burst or packet from an edge node to an associated central node / ring node two cases can happen.

First, the resources for transmitting the burst/packet are available in the central node and a path is reserved according to the already described behaviour. After an offset time the burst/packet in the edge node is sent and the burst/packet is transmitted through the reserved paths to its destination.

Second, the resources for reservation of a path and transmitting the burst/packet are not available. To avoid a collision, an answer is sent back to the originating edge node causing the burst to wait, until further transmission attempt(s) take place.
After sending of the header from the edge node to the associated central node, the header is evaluated in the central node and the requested reservation is compared to previous reservations of other headers. In case of a reservation conflict an answer is sent back to the originating edge node. Said answer is evaluated in the edge node and the sending of the packet or burst is abandoned and the packet or burst is stored in the edge node in the electrical domain.

The answer comprises the time or time lag of occupancy or a time or time lag for a future reservation or any other kind of message to transfer an information from the edge node to the central node.

According to the information sent to the edge node and an implemented mechanism, this node can have a different behaviour.

First, in case of a reservation conflict the central node determines a time or a time lag for an occupancy of the central node and sends an answer, where said time or time lag is contained, to the originating edge node. Said answer is evaluated in the edge node, the sending of the burst or packet is abandoned, the burst or packet is stored in the edge node and after expiring of said time or time lag a header is sent again to the central node, to try a new reservation for a transmission of said burst or packet.

Second, that in case of a reservation conflict the central node schedules a reservation for the burst or packet of the associated header, determines a particular time or a time lag for transmission of said burst or packet and sends an answer, where said particular time or time lag is contained, to the originating edge node. There said answer is evaluated, the sending of the burst or packet is abandoned, the burst or packet is stored in the edge node and after expiring of said time or time lag the burst is sent to the central node, to use the scheduled reservation.

It is independent, which burst reservation mechanisms, like just-in-time (JIT), Horizon reservation mechanism (Horizon) or just-enough time (JET), is used. If a header of a burst/packet from an edge node arrives at the central node, the node knows according to its reservation schedule until when it will be busy. This is because of old reservations by other headers received from neighbour central nodes. The central node can therefore deduce if the optical burst/packet associated to the header will be blocked or not.

During the storing of the burst in the edge node arriving data packets can be aggregated to the stored burst. If this is done, a second reservation for a burst, which contains in the meantime arriving data packets, is avoided. Therefore only one burst, which is larger than before and has a higher multiplexing gain, is sent. Because one larger burst is sent instead of two bursts with corresponding headers, less resources are used.

Once a burst/packet is inserted into the ring, star or bus network, it will continue its way to the destination edge node without any kind of blocking. If the network load increases, optical bursts / packets that can not be transported by the network will be stored in the edge nodes. If the network load reaches a critical level, the buffers in the edge nodes will eventually overload and lose information. However, even under these heavy load conditions the network (ring, star, bus) will be loss-free.

In the edge node the mentioned burst can be transformed and sent as an optical burst to a central node of an Optical Burst Switched network. Also, in the edge node the mentioned packet can be transformed and sent as an optical packet to a central node of an Optical Packed Switched network.

### The main principles of the invention are:

The nodes, at which blocking might take place send back an answer to the correspondent edge node if they foresee according to their burst reservation schedule that its associated burst or packet will be blocked.

If an edge node receives said answer, the sending of the burst/packet is abandoned and the burst/packet is stored. In case of an OBS network this might happen by storing an electrical version of the optical bursts/packets which have to be sent to the ring. Often such edge nodes are an interface between the electrical and optical domain.

If an edge node sends a header and receives an answer back, it knows automatically that the associated burst/packet will not get through the next central node due to blocking. It is also possible that the answer of a burst/packet that is about to be blocked carries some useful information from the central node on its way back to the edge node. This information could be for instance, the exact moment when the central node is reserved for the optical burst/packet. Knowing this, the edge node can immediately send the optical burst/packet right when the time/moment is achieved.

The same principles described above by an example for a ring network can be analogue applied to a star (one central node with many edge nodes) and a bus network ("split or broken ring") without modifications.

The inventive methods extend the principles of burst or packet switched networks, like OBS and OPS networks, with central node without burst or packet storage capabilities from the unacknowledged sending of a burst to a "backpressure" communication for the first hop from the edge node to the central node in case of conflict in the central node.

Further advantages of the inventive methods are:
- It reduces the blocking probability in the network to zero.
- The solution is especially suited for Optical Burst and Packet Switched networks.
- The solution is especially suited for ring, star and bus networks.
- It is simple and easy. It does not demand much processing time neither at the central nodes nor at the edge nodes.
- It is not a bandwidth consuming, since it does not require to increase the size of the optical headers.
- It is cheap since it requires no additional hardware. In addition for OBS / OPS networks storing the information electrically in the edge nodes is a low priced solution compared to optical storing with Fibre Delay Lines (FDL).
- The method can be implemented in software.

## Claims

1. A method for transmission of data packets through a network, where said network is configured as ring, star or bus network with central nodes (node_0 - node_9) without storage capabilities, where at least some of the central nodes (node_0, node_2, node_4, node_6, node_8) have at least one associated edge node (Edge_0 - Edge_4) comprising an electrical and an optical domain, whereby an edge node (Edge_0 - Edge_4) is connected with one central node (node_0 - node_9), where said edge nodes (Edge_0 - Edge_4) receive said data packets and generate an associated header for a data packet or a burst comprising aggregated data packets, where said header is sent previous to the data packet or burst from the edge node (Edge_0) to the associated central node (node_0), where the header is evaluated, a path is reserved for the associated burst and the header is sent to the next central node (node_1), where the same procedure is repeated in order to establish a path through the central nodes (node_0 - node_9) of the network to a destination of the data packet or burst,
where after sending of a header from the edge node (Edge_0) to the associated central node (node_0) and after evaluation of the header in the central node (node_0) the requested reservation is compared to previous reservations of other headers and
in case of a reservation conflict the associated central node (node_0) determines a time or a time lag for an occupancy of the central node (node_0) and sends an answer, where said time or time lag is contained, to the originating edge node (Edge_0), where said answer is evaluated, the sending of the data packet or burst is abandoned, the data packet or burst is stored in the electrical domain of the edge node (Edge_0) and after expiring of said time or time lag a header is sent again to the associated central node (node_0), to try a new reservation for a transmission of said data packet or burst.

2. A method for transmission of data packets through a network, where said network is configured as ring, star or bus network with central nodes (node_0 - node_9) without storage capabilities, where at least some of the central nodes (node_0, node_2, node_4, node_6, node_8) have at least one associated edge node (Edge_0 - Edge_4) comprising an electrical and an optical domain, whereby an edge node (Edge_0 - Edge_4) is connected with one central node (node_0 - node_9), where said edge nodes (Edge_0 - Edge_4) receive said data packets and generate an associated header for a data packet or a burst comprising aggregated data packets, where said header is sent previous to the data packet or burst from the edge node (Edge_0) to the associated central node (node_0), where the header is evaluated, a path is reserved for the associated data packet or burst and the header is sent to the next central node (node_1), where the same procedure is repeated in order to establish a path through the central nodes (node_0 - node_9) of the network to a destination of the data packet or burst,
where after sending of a header from the edge node (Edge_0) to the associated central node (node_0) and after evaluation of the header in the central node (node_0) the requested reservation is compared to previous reservations of other headers and
in case of a reservation conflict the associated central node (node_0) schedules a reservation for the data packet or burst of the associated header, determines a particular time or a time lag for transmission of said packet or burst, sends an answer, where said particular time or time lag is contained, to the originating edge node (Edge_0), where said answer is evaluated, the sending of the data packet or burst is abandoned, the data packet or burst is stored in the electrical domain of the edge node (Edge_0) and after expiring of said time or time lag the data packet or burst is sent to the associated central node (node_0) to use the scheduled reservation.

3. The method as claimed in claim 1 or 2,
**characterized in that**
during the storing of the burst in the edge node arriving data packets are aggregated to the stored burst.

4. The method as claimed in any one of claims 1 to 3,
**characterized in that**
IP packets are used as incoming packets.

5. The method as claimed in any one of claims 1 to 4,
**characterized in that**
the method is used in an Optical Burst Switched network.

6. The method as claimed in claim 5,
**characterized in that**
the burst is transformed and sent as an optical burst into an Optical Burst Switched network.

7. The method as claimed in any one of claims 1 to 4,
**characterized in that**
the method is used in an Optical Packet Switched network.

8. The method as claimed in claim 7,
**characterized in that**
the packet is transformed and sent as an optical packet into an Optical Packed Switched network.

## Patentansprüche

1. Verfahren zur Übertragung von Datenpaketen durch ein Netz, wobei das Netz als Ring-, Stern- oder Busnetz mit zentralen Knoten (node_0 - node_9) ohne Speicherfähigkeiten ausgelegt ist, wobei mindestens einige der zentralen Knoten (node_0, node_2, node_4, node_6, node_8) mindestens einen assoziierten Randknoten (Edge_0 - Edge_4) mit einer elektrischen und einer optischen Domäne aufweisen, wodurch ein Randknoten (Edge_0 - Edge_4) mit einem zentralen Knoten (node_0 - node_9) verbunden wird, wobei die Randknoten (Edge _0 - Edge_4) die Datenpakete empfangen und einen assoziierten Kopfteil für ein Datenpaket oder einen Burst mit aggregierten Datenpaketen erzeugen, wobei der Kopfteil vor dem Datenpaket oder Burst von dem Randknoten (Edge_0) zu dem assoziierten zentralen Knoten (node_0) gesendet wird, in dem der Kopfteil ausgewertet wird, ein Pfad für den assoziierten Burst reserviert und der Kopfteil zu dem nächsten zentralen Knoten (node_1) gesendet wird, in dem dieselbe Prozedur wiederholt wird, um einen Pfad durch die zentralen Knoten (node_0 - node_9) des Netzes zu einem Ziel des Datenpakets oder Bursts herzustellen,
wobei nach dem Senden eines Kopfteils von dem Randknoten (Edge_0) zu dem assoziierten zentralen Knoten (node_0) nach der Auswertung des Kopfteils in dem zentralen Knoten (node_0) die angeforderte Reservierung mit vorherigen Reservierungen anderer Kopfteile verglichen wird und
im Fall eines Reservierungskonflikts der assoziierte zentrale Knoten (node_0) eine Zeit oder Zeitverzögerung für eine Belegung des zentralen Knotens (node_0) bestimmt und eine Antwort, in der die Zeit oder Zeitverzögerung enthalten ist, zu dem Ursprungsrandknoten (Edge_0) sendet, in dem die Antwort ausgewertet wird, das Senden des Datenpakets oder Bursts abgebrochen wird, das Datenpaket oder der Burst in der elektrischen Domäne des Randknotens (Edge_0) gespeichert wird und nach dem Ablauf der Zeit oder Zeitverzögerung nochmals ein Kopfteil zu dem assoziierten zentralen Knoten (node_0) gesendet wird, um eine neue Reservierung für eine Übertragung des Datenpakets oder Bursts zu versuchen.

2. Verfahren zur Übertragung von Datenpaketen durch ein Netz, wobei das Netz als Ring-, Stern- oder Busnetz mit zentralen Knoten (node 0 - node 9) ohne Speicherfähigkeiten ausgelegt ist, wobei mindestens einige der zentralen Knoten (node_0, node_2, node_4, node_6, node_8) mindestens einen assoziierten Randknoten (Edge_ 0 - Edge_4) mit einer elektrischen und einer optischen Domäne aufweisen, wodurch ein Randknoten (Edge_0 - Edge_4) mit einem zentralen Knoten (node_0 - node_9) verbunden wird, wobei die Randknoten (Edge_0 - Edge_4) die Datenpakete empfangen und einen assoziierten Kopfteil für ein Datenpaket oder einen Burst, der aggregierte Datenpakete umfaßt, erzeugen, wobei der Kopfteil vor dem Datenpaket oder Burst von dem Randknoten (Edge_0) zu dem assoziierten zentralen Knoten (node_0) gesendet wird, in dem der Kopfteil ausgewertet wird, ein Pfad für das assoziierte Datenpaket oder den assoziierten Burst reserviert und der Kopfteil zu dem nächsten zentralen Knoten (node_1) gesendet wird, in dem dieselbe Prozedur wiederholt wird, um einen Pfad durch die zentralen Knoten (node_0 - node_9) des Netzes zu einem Ziel des Datenpakets oder Bursts herzustellen,
wobei nach dem Senden eines Kopfteils von dem Randknoten (Edge_0) zu dem assoziierten zentralen Knoten (node_0) und nach der Auswertung des Kopfteils in dem zentralen Knoten (node_0) die angeforderte Reservierung mit vorherigen Reservierungen anderer Kopfteile verglichen wird und
im Fall eines Reservierungskonflikts der assoziierte zentrale Knoten (node_0) eine Reservierung für das Datenpaket oder den Burst des assoziierten Kopfteils einteilt, eine bestimmte Zeit oder Zeitverzögerung für die Übertragung des Pakets oder Burst bestimmt, eine Antwort, in der die bestimmte Zeit oder Zeitverzögerung enthalten ist, zu dem Ursprungsrandknoten (Edge_0) sendet, in dem die Anwort ausgewertet wird, das Senden des Datenpakets oder Bursts abgebrochen wird, das Datenpaket oder der Burst in der elektrischen Domäne des Randknotens (Edge_0) gespeichert und nach dem Ablauf der Zeit oder Zeitverzögerung das Datenpaket oder der Burst zu dem assoziierten zentralen Knoten (node_0) gesendet wird, um die eingeteilte Reservierung zu nutzen.

3. Verfahren nach Anspruch 1 oder 2, **dadurch gekennzeichnet, daß**
während des Speicherns des Bursts in dem Randknoten ankommende Datenpakete zu dem gespeicherten Burst aggregiert werden.

4. Verfahren nach einem der Ansprüche 1 bis 3, **dadurch gekennzeichnet, daß**
IP-Pakete als ankommende Pakete verwendet werden.

5. Verfahren nach einem der Ansprüche 1 bis 4, **dadurch gekennzeichnet, daß**
das Verfahren in einem Optical-Burst-Switched-Netz verwendet wird.

6. Verfahren nach Anspruch 5, **dadurch gekennzeichnet, daß**
der Burst transformiert und als optischer Burst in ein Optical-Burst-Switched-Netz gesendet wird.

7. Verfahren nach einem der Ansprüche 1 bis 4, **dadurch gekennzeichnet, daß**
das Verfahren in einem Optical-Packet-Switched-Netz verwendet wird.

8. Verfahren nach Anspruch 7, **dadurch gekennzeichnet, daß**
das Paket transformiert und als optisches Paket in ein Optical-Packet-Switched-Netz gesendet wird.

## Revendications

1. Procédé pour la transmission de paquets de données à travers un réseau, dans lequel ledit réseau est configuré comme un réseau en anneau, en étoile ou en bus avec des noeuds centraux (node_0 -node_9) sans capacités de stockage, dans lequel au moins quelques-uns des noeuds centraux (node_0, node 2, node_4, node_6, node_8) ont au moins un noeud marginal associé (edge_0 - edge_4) comprenant un domaine électrique et un optique, alors qu'un noeud marginal (edge_0 - edge_4) est connecté à un noeud central (node_0 - node_9), dans lequel lesdits noeuds marginaux (edge_0 - edge_4) reçoivent lesdits paquets de données et génèrent un en-tête associé pour un paquet ou une salve de données comprenant des paquets de données agrégés, dans lequel ledit en-tête est envoyé antérieurement au paquet ou à la salve de données depuis le noeud marginal (edge_0) vers le noeud central associé (node_0),
dans lequel l'en-tête est évalué, un trajet est réservé pour la salve associée et l'en-tête est envoyé au noeud central suivant (node_1), dans lequel la même procédure est répétée afin d'établir un trajet à travers les noeuds centraux (node_0 - node_9) du réseau vers une destination du paquet ou de la salve de données,
dans lequel après envoi d'un en-tête depuis le noeud marginal (edge_0) vers le noeud central associé (node_0) et après évaluation de l'en-tête dans le noeud central (node_0) la réservation demandée est comparée aux réservations précédentes d'autres en-têtes et en cas d'un conflit de réservation, le noeud central associé (node_0) détermine un temps ou un temps de réponse pour une occupation du noeud central (node_0) et envoie une réponse, où ledit temps ou temps de réponse est restreint, vers le noeud marginal de départ (edge_0), où ladite réponse est évaluée, l'envoi du paquet ou de la salve de données est abandonné, le paquet ou la salve de données est stocké dans le domaine électrique du noeud marginal (edge_0) et après expiration dudit temps ou temps de réponse, un en-tête est envoyé de nouveau vers le noeud central associé (node_0), pour essayer une nouvelle réservation pour une transmission dudit paquet ou de ladite salve de données.

2. Procédé pour la transmission de paquets de donnés à travers un réseau, dans lequel ledit réseau est configuré en réseau en anneau, en étoile ou en bus avec des noeuds centraux (node_0 - node_9) sans capacités de stockage, dans lequel au moins quelques-uns des noeuds centraux (node_0, node_2, node_4, node_6, node_8) ont au moins un noeud marginal associé (edge_0 - edge_4) comprenant un domaine électrique et un domaine optique, de sorte qu'un noeud marginal (edge_0 - edge_4) est connecté à un noeud central (node_0 - node_9), dans lequel lesdits noeuds marginaux (edge_0 - edge_4) reçoivent lesdits paquets de données et génèrent un en-tête associé pour un paquet ou une salve de données comprenant des paquets de données agrégées, dans lequel ledit en-tête est envoyé auparavant au paquet ou à la salve de données depuis le noeud marginal (edge_0) au noeud central associé (node_0), où l'en-tête est évalué, un trajet est réservé pour le paquet ou la salve de données associé et l'en-tête est envoyé au noeud central suivant (node_1), dans lequel la même procédure est répétée afin d'établir un trajet à travers les noeuds centraux (node_0 - node_9) du réseau vers une destination du paquet ou de la salve de données,
dans lequel après envoi d'un en-tête depuis le noeud marginal (edge_0) vers le noeud central associé (node_0) et après évaluation de l'en-tête dans le noeud central (node_0) la réservation demandée est comparée aux réservations antérieures d'autres en-têtes et dans le cas d'un conflit de réservation le noeud central associé (node_0) programme une réservation pour le paquet ou la salve de données de l'en-tête associé, détermine un temps ou un temps de réponse particulier pour la transmission dudit paquet ou de ladite salve, envoie une réponse, où ledit temps ou temps de réponse particulier est restreint, au noeud marginal de départ (edge_0), où ladite réponse est évaluée, l'envoi du paquet ou de la salve de données est abandonné, le paquet ou la salve de données est stocké dans le domaine électrique du noeud marginal (edge_0) et après expiration dudit temps ou temps de réponse, le paquet ou la salve de données est envoyé au noeud central associé (node_0) pour utiliser la réservation programmée.

3. Procédé selon la revendication 1 ou 2, **caractérisé en ce que** pendant le stockage de la salve dans le noeud marginal, des paquets de données qui arrivent sont agrégés vers la salve stockée.

4. Procédé selon l'une quelconque des revendications 1 à 3, **caractérisé en ce que** des paquets IP sont utilisés comme paquets entrants.

5. Procédé selon l'une quelconque des revendications 1 à 4, **caractérisé en ce que** le procédé est utilisé dans un réseau à commutation optique de salves (Optical Burst Switched Network).

6. Procédé selon la revendication 5, **caractérisé en ce que** la salve est transformée et envoyée comme salve optique dans un réseau à commutation optique de salves.

7. Procédé selon l'une quelconque des revendications 1 à 4, **caractérisé en ce que** le procédé est utilisé dans un réseau à commutation optique de paquets (Optical Packet Switched Network) .

8. Procédé selon la revendication 7, **caractérisé en ce que** le paquet est transformé et envoyé comme paquet optique dans un réseau à commutation optique de salves.
